# EUROPÄISCHE PATENTANMELDUNG

(11) **EP 4 529 010 A1**
(43) Veröffentlichungstag der Anmeldung: **26.03.2025**
(21) Anmeldenummer: 23198599.5
(22) Anmeldetag: 20.09.2023
(51) Int. Cl.: H02M 3/07, H02M 3/158, H02M 1/00

(54) **STROMRICHTER MIT VERBESSERTER BALANCIERSCHALTUNG**

(71) Anmelder: Siemens Aktiengesellschaft, 80333 München (DE)
(72) Erfinder: Hartwig, Raphael, 92342 Freystadt (DE); Hensler, Alexander, 91466 Gerhardshofen (DE)
(74) Vertreter: Siemens Patent Attorneys

(57) **Zusammenfassung**

Ein Stromrichter weist einen ersten Gleichspannungsanschluss (1), einen zweiten Gleichspannungsanschluss (2), einen Wechselspannungsanschluss (3) und einen ersten Knotenpunkt (5) auf. Der erste Gleichspannungsanschluss (1) ist über eine Reihenschaltung eines ersten Halbleiterschalters (6), eines zweiten Halbleiterschalters (7) und optional erster weiterer Halbleiterschalter (24) mit dem ersten Knotenpunkt (5) verbunden, wobei die beiden Halbleiterschalter (6, 7) unmittelbar aufeinander folgen und der erste Halbleiterschalter (6) näher am ersten Gleichspannungsanschluss (1) angeordnet ist als der zweite Halbleiterschalter (7). Der zweite Gleichspannungsanschluss (2) ist über eine Reihenschaltung eines dritten Halbleiterschalters (8), eines vierten Halbleiterschalters (9) und optional zweiter weiterer Halbleiterschalter (25) mit dem ersten Knotenpunkt (5) verbunden, wobei der dritte und der vierte Halbleiterschalter (8, 9) unmittelbar aufeinander folgen und der vierte Halbleiterschalter (9) näher am zweiten Gleichspannungsanschluss (2) angeordnet ist als der dritte Halbleiterschalter (8). Der Wechselspannungsanschluss (3) ist über eine Drossel (17) mit dem ersten Knotenpunkt (5) verbunden. Knotenpunkte (11, 12), die dem ersten und vierten Halbleiterschalter (6, 9) unmittelbar vorgeordnet sind, sind über einen ersten Kondensator (13) miteinander verbunden. Knotenpunkte (14, 15), die zwischen dem ersten und dem zweiten bzw. zwischen dem dritten und dem vierten Halbleiterschalter (6 bis 9) angeordnet sind, sind über einen zweiten Kondensator (16) miteinander verbunden. Der erste Knotenpunkt (5) und der Wechselspannungsanschluss (3) sind auch über eine Reihenschaltung eines Widerstands (18) und eines Schalters (19), der bidirektional leiten und bidirektional sperren kann, miteinander verbunden.

## Beschreibung

Die vorliegende Erfindung geht aus von einem Stromrichter,
- wobei der Stromrichter einen ersten Gleichspannungsanschluss, einen zweiten Gleichspannungsanschluss, einen Wechselspannungsanschluss und einen ersten Knotenpunkt aufweist,
- wobei der erste Gleichspannungsanschluss über eine Reihenschaltung eines ersten Halbleiterschalters, eines zweiten Halbleiterschalters und optional erster weiterer Halbleiterschalter mit dem ersten Knotenpunkt verbunden ist,
- wobei der zweite Gleichspannungsanschluss über eine Reihenschaltung eines dritten Halbleiterschalters, eines vierten Halbleiterschalters und optional zweiter weiterer Halbleiterschalter mit dem ersten Knotenpunkt verbunden ist,
- wobei der Wechselspannungsanschluss über eine Drossel mit dem ersten Knotenpunkt verbunden ist,
- wobei der erste und der zweite Halbleiterschalter unmittelbar aufeinander folgen und der erste Halbleiterschalter näher am ersten Gleichspannungsanschluss angeordnet ist als der zweite Halbleiterschalter,
- wobei der dritte und der vierte Halbleiterschalter unmittelbar aufeinander folgen und der vierte Halbleiterschalter näher am zweiten Gleichspannungsanschluss angeordnet ist als der dritte Halbleiterschalter,
- wobei ein zweiter Knotenpunkt, der dem ersten Halbleiterschalter in Richtung auf den ersten Gleichspannungsanschluss zu unmittelbar vorgeordnet ist, und ein dritter Knotenpunkt, der dem vierten Halbleiterschalter in Richtung auf den zweiten Gleichspannungsanschluss zu unmittelbar vorgeordnet ist, über einen ersten Kondensator miteinander verbunden sind,
- wobei ein vierter Knotenpunkt, der zwischen dem ersten und dem zweiten Halbleiterschalter angeordnet ist, und ein fünfter Knotenpunkt, der zwischen dem dritten und dem vierten Halbleiterschalter angeordnet ist, über einen zweiten Kondensator miteinander verbunden sind.

Ein derartiger Stromrichter ist allgemein bekannt.

In üblichen Zweilevel- und Dreilevel-Umrichtertopologien ist ein erheblicher Filteraufwand erforderlich. Hiermit verbunden sind das für den Filter erforderliche Volumen und die für den Filter erforderlichen Kosten hoch. Die sogenannte Flying-Capacitor-Multileveltopologie bietet demgegenüber nennenswerte Vorteile.

Die entsprechende Topologie als solche ist Fachleuten bekannt. Rein beispielhaft kann auf die beiden Fachaufsätze "Behaviour of the flying capacitor converter under critical operating conditions" von P. Papamanolis, D.Neumayr und J.W. Kolar, 2017 IEEE 26 International Symposium on Industrial Electronics (ISIE), Edinburgh, UK, 2017, Seiten 628 bis 635, und "Analysis and Design of Multicell DC/DC Converters Using Vectorized Models" von Meynard, Thierry A. (2015) verwiesen werden.

Eine derartige Multileveltopologie benötigt in vielen Fällen eine aktive Erfassung und Messung der einzelnen Kondensatorspannungen, um die Kondensatorspannungen regeln zu können. Dadurch steigen die Komplexität und auch die Anforderungen an die Regelung deutlich an. Es gibt allerdings auch die Möglichkeit, einen sogenannten Flying-Capacitor-Umrichter mit einer Standardregelung zu betreiben, wie sie bei einem Zweilevelumrichter üblich ist. In diesem Fall wird der natürliche Ausgleichseffekt der Kondensatorspannungen genutzt. Dieser Effekt tritt auf, wenn der Flying-Capacitor-Umrichter mit einer phasenverschobenen Pulsweitenmodulation (phase shift pulse width modulation) betrieben wird. Die Dynamik dieses Ausgleichseffekts hängt stark von den verwendeten Komponenten (beispielsweise EMV-Filter), deren Kenngrößen und deren parasitären Größen ab. Im statischen Betriebszustand funktioniert dieser Ausgleich meist sehr gut. Während transienter Zustände kann es jedoch zu Unsymmetrien der Kondensatorspannungen kommen. Aufgrund derartiger Unsymmetrien müssen die verwendeten Halbleiterschalter auf eine höhere Sperrspannung dimensioniert werden. Dadurch erhöhen sich die Kosten und die Schaltverluste.

Zum schnelleren Ausgleich von Unsymmetrien werden im dem eingangs genannten Stand der Technik sogenannte Balance Booster verwendet. Die meisten Balance Booster weisen jedoch das Problem auf, dass sie dauerhaft (auch im stationären Fall) Verluste hervorrufen. Dadurch wird die eigentlich sehr gute Effizienz des Flying-Capacitor-Umrichters reduziert. Es sind jedoch auch Lösungen bekannt, bei denen (meist) nur im transienten Zustand Verluste auftreten. Bei diesen Lösungen werden innerhalb der Balance Booster Zenerdioden verwendet.

Auch die Verwendung von Zenerdioden ist jedoch problematisch. So weisen Zenerdioden üblicherweise eine stark temperaturabhängige Zenerspannung auf. Aufgrund von Überspannungen können weiterhin auch im stationären Fall Verluste auftreten. Der Spannungsausgleich wirkt erst dann, wenn die Spannungen bereits unsymmetrisch sind und darüber hinaus die Unsymmetrie über der Zenerspannung liegt. Weiterhin erfolgt der Spannungsausgleich nur für diejenigen Kondensatoren, deren Spannungsdifferenz über der Zenerspannung liegt. Schließlich entstehen aufgrund der Schaltfrequenz der Halbleiterschalter in den Zenerdioden hohe Verluste. Die Zenerdioden müssen daher zunächst so ausgelegt werden, dass sie diese Verluste verkraften. Weiterhin müssen die Zenerdioden oftmals gekühlt werden. Schließlich verringern die Verluste den Wirkungsgrad des Umrichters. Auch ist nicht vorab bekannt, zu welchen Zeitpunkten die Zenerdioden leiten. Die Dimensionierung von Widerständen, die mit den Zenerdioden in Reihe geschaltet sind und den Stromfluss begrenzen sollen, gestaltet sich daher schwierig.

Die Aufgabe der vorliegenden Erfindung besteht darin, einen Stromrichter der eingangs genannten Art derart weiterzuentwickeln, dass die Probleme des Standes der Technik vermieden werden. Der Stromrichter soll einfach aufgebaut sein, zuverlässig arbeiten und nur geringe Verluste aufweisen.

Die Aufgabe wird durch einen Stromrichter mit den Merkmalen des Anspruchs 1 gelöst. Vorteilhafte Ausgestaltungen des erfindungsgemäßen Stromrichters sind Gegenstand der abhängigen Ansprüche 2 bis 7.

Erfindungsgemäß wird ein Stromrichter der eingangs genannten Art dadurch ausgestaltet, dass der erste Knotenpunkt und der Wechselspannungsanschluss auch über eine Reihenschaltung eines Widerstands und eines Schalters, der bidirektional leiten und bidirektional sperren kann, miteinander verbunden sind.

Im Gegensatz zum Stand der Technik, bei denen die Balance Booster rein passive Schaltungen sind, also keine aktiv gesteuerten Elemente aufweisen, ist vorliegend der Schalter vorhanden, der aktiv zwischen den Zuständen "leitend" und "gesperrt" geschalten werden kann. Dadurch kann aktiv festgelegt werden, wann und wie lange der Balance Booster einen Spannungsausgleich vornehmen soll. Nur während der Zeiten, während derer der Schalter leitend ist, fließt ein Strom durch den Widerstand. Damit treten auch nur während dieser Zeiten ein Spannungsausgleich und Verluste auf.

In vielen Fällen ist der erste Halbleiterschalter direkt mit dem ersten Gleichspannungsanschluss verbunden und ist der vierte Halbleiterschalter direkt mit dem zweiten Gleichspannungsanschluss verbunden. Prinzipiell können der erste und der vierte Halbleiterschalter auch an anderer Stelle der jeweiligen Reihenschaltung angeordnet sein. In völlig analoger Weise können der zweite und der dritte Halbleiterschalter direkt mit dem ersten Knotenpunkt verbunden sein. Prinzipiell können der zweite und der dritte Halbleiterschalter auch an anderer Stelle der jeweiligen Reihenschaltung angeordnet sein.

Wenn sowohl die eine als auch die andere Ausgestaltung realisiert sind, weisen die beiden Reihenschaltungen jeweils ausschließlich die beiden jeweiligen Halbleiterschalter auf. Diese Ausgestaltung stellt eine Minimalkonfiguration dar.

Der Stromrichter weist vorzugsweise eine Steuereinrichtung auf, die den ersten, den zweiten, den dritten und den vierten Halbleiterschalter sowie, sofern vorhanden, die ersten und zweiten weiteren Halbleiterschalter gemäß einer phasenverschobenen Pulsweitenmodulation ansteuert. In diesem Fall ist es möglich, dass die Steuereinrichtung eine Pulsweite der Pulsweitenmodulation überwacht und den Schalter durchschaltet, wenn und solange eine Änderung der Pulsweite einen vorbestimmten Grenzwert übersteigt. Anderenfalls, wenn also die Änderung der Pulsweite den vorbestimmten Grenzwert nicht übersteigt, hält die Steuereinrichtung den Schalter in einem gesperrten Zustand. Dadurch kann der Schalter von der Steuereinrichtung bei Bedarf proaktiv, also noch bevor sich eine größere Spannungsdifferenz aufgebaut hat, durchgeschaltet werden.

Von dem vorstehend erläuterten Sachverhalt soll mit umfasst sein, wenn der vorbestimmte Grenzwert eine gewisse, meist recht geringe, Hysterese aufweist.

Für die Ausgestaltung des Schalters sind verschiedene Möglichkeiten gegeben.

Beispielsweise ist es möglich, dass der Schalter als Reihenschaltung eines ersten und eines zweiten Transistorelements ausgebildet ist und den beiden Transistorelementen jeweils eine Freilaufdiode parallel geschaltet ist. In diesem Fall sind die beiden Freilaufdioden gegenpolig angeordnet.

Alternativ ist es möglich, dass der Schalter als Parallelschaltung eines ersten und eines zweiten Transistorelements ausgebildet ist und die beiden Transistorelemente in entgegengesetzte Richtungen stromleitend sind. Ein derartiger Schalter wird beispielsweise von der Firma Fuji vermarktet. Parallelgeschaltete oder in Serie geschaltete Dioden ähnlich zu den Freilaufdioden der Serienschaltung zweier Transistorelemente sind im Falle der Parallelschaltung der Transistorelemente nicht vorhanden.

Alternativ zu einer Verwendung zweier Transistorelemente ist es auch möglich, dass der Schalter als intrinsisch bidirektional schaltbares Schaltelement ausgebildet ist. Ein derartiger Schalter ist beispielsweise ein so genannter bidirectional switch, insbesondere auf GaN-Basis. Ein derartiger Schalter wird beispielsweise von der Firma Panasonic vermarktet.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: einen Stromrichter,
- FIG 2 und 3: mögliche alternative Ausgestaltungen eines Schalters des Stromrichters,
- FIG 4: ein Ablaufdiagramm und
- FIG 5: eine Modifikation des Stromrichters von FIG 1.

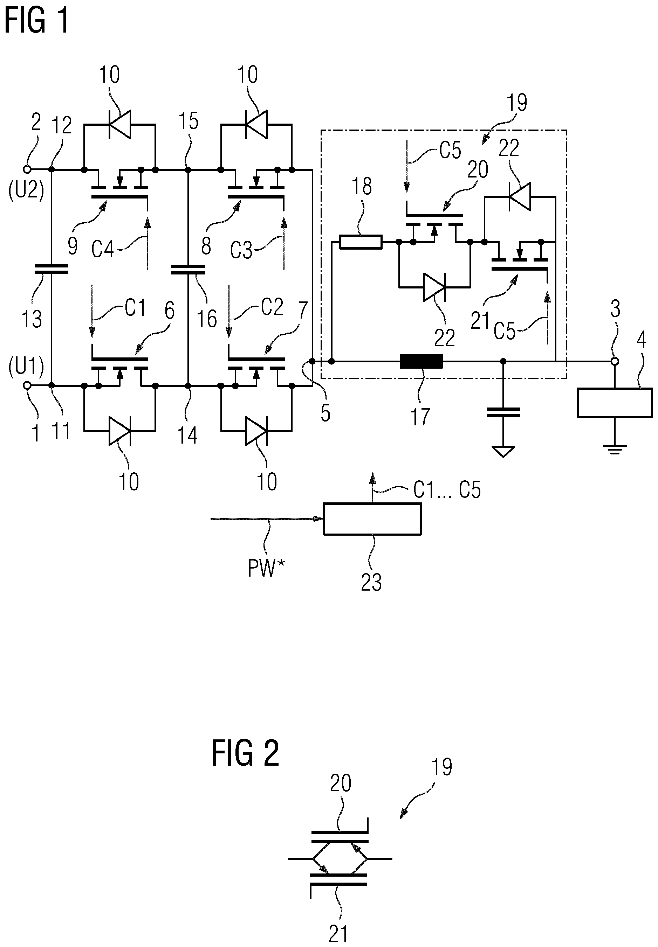

Nachstehend wird in Verbindung mit FIG 1 zunächst eine Minimalkonfiguration eines erfindungsgemäßen Stromrichters erläutert.

Gemäß FIG 1 weist der Stromrichter einen ersten Gleichspannungsanschluss 1 und einen zweiten Gleichspannungsanschluss 2 auf. An dem ersten Gleichspannungsanschluss 1 steht in aller Regel niedriges Potenzial U1 an, an dem zweiten Gleichspannungsanschluss 2 ein hohes Potenzial U2. Der Stromrichter weist weiterhin einen Wechselspannungsanschluss 3 auf. Über den Wechselspannungsanschluss 3 kann beispielsweise eine Last 4 mit elektrischer Energie versorgt werden.

Vorliegend wird somit angenommen, dass der Energiefluss von den Gleichspannungsanschlüssen 1, 2 über den Wechselspannungsanschluss 3 zur Last 4 erfolgt. Prinzipiell ist aber auch der umgekehrte Energiefluss möglich.

Der Stromrichter weist weiterhin einen ersten Knotenpunkt 5 auf. Der erste Gleichspannungsanschluss 1 ist mit dem ersten Knotenpunkt 5 über eine Reihenschaltung eines ersten Halbleiterschalters 6 und eines zweiten Halbleiterschalters 7 verbunden. Der erste Halbleiterschalter 6 und der zweite Halbleiterschalter 7 folgen unmittelbar aufeinander. Hierbei ist der erste Halbleiterschalter 6 näher am ersten Gleichspannungsanschluss 1 angeordnet als der zweite Halbleiterschalter 7. In analoger Weise ist der zweite Gleichspannungsanschluss 2 mit dem ersten Knotenpunkt 5 über eine Reihenschaltung eines dritten Halbleiterschalters 8 und eines vierten Halbleiterschalters 9 verbunden. Der dritte Halbleiterschalter 8 und der vierte Halbleiterschalter 9 folgen unmittelbar aufeinander. Hierbei ist der vierte Halbleiterschalter 9 näher am zweiten Gleichspannungsanschluss 2 angeordnet als der dritte Halbleiterschalter 8. Den Halbleiterschaltern 6 bis 9 sind üblicherweise jeweils Freilaufdioden 10 parallel geschaltet. Die Freilaufdioden 10 können jeweils ein intrinsischer Bestandteil des jeweiligen Schaltelements 6 bis 9 sein. Alternativ kann es sich um eigenständige Dioden (also diskrete Bauteile) handeln. Die Halbleiterschalter 6 bis 9 selbst sind üblicherweise als spannungsgesteuerte Schaltelemente ausgebildet, beispielsweise auf IGBT-Basis oder auf FET-Basis. Diese Ausgestaltung ist weit verbreitet, arbeitet zuverlässig und weist geringe Schaltverluste auf.

In der Minimalkonfiguration sind vom ersten Knotenpunkt 5 zu den beiden Gleichspannungsanschlüssen 1, 2 gesehen zusätzlich zu den Halbleiterschaltern 6 bis 9 (soweit vorhanden, einschließlich der parallelgeschalteten Freilaufdioden 10) keine weiteren Elemente vorhanden, insbesondere keine schaltenden Elemente. In diesem Fall ist der erste Halbleiterschalter 6 direkt mit dem ersten Gleichspannungsanschluss 1 verbunden und ist auch der vierte Halbleiterschalter 9 direkt mit dem zweiten Gleichspannungsanschluss 2 verbunden. Weiterhin sind in diesem Fall der zweite und der dritte Halbleiterschalter 7, 8 direkt mit dem ersten Knotenpunkt 5 verbunden.

Weiterhin ist dem ersten Halbleiterschalter 6 in Richtung auf den ersten Gleichspannungsanschluss 1 zu ein zweiter Knotenpunkt 11 unmittelbar vorgeordnet. In analoger Weise ist dem vierten Halbleiterschalter 9 in Richtung auf den zweiten Gleichspannungsanschluss 2 zu ein dritter Knotenpunkt 12 unmittelbar vorgeordnet. Der Begriff "unmittelbar vorgeordnet" soll bedeuten, dass zwischen dem jeweiligen Halbleiterschalter 6, 9 und dem jeweiligen Gleichspannungsanschluss 1, 2 keine anderen Elemente angeordnet sind, insbesondere keine schaltenden Elemente. Der zweite und der dritte Knotenpunkt 11, 12 sind über einen ersten Kondensator 13 miteinander verbunden.

In analoger Weise ist zwischen dem ersten und dem zweiten Halbleiterschalter 6, 7 ein vierter Knotenpunkt 14 angeordnet und ist zwischen dem dritten und dem vierten Halbleiterschalter 8, 9 ein fünfter Knotenpunkt 15 angeordnet. Der vierte und der fünfte Knotenpunkt 14, 15 sind über einen zweiten Kondensator 16 miteinander verbunden.

Der Wechselspannungsanschluss 3 ist mit dem ersten Knotenpunkt 5 über eine Drossel 17 verbunden. Weiterhin ist der Wechselspannungsanschluss 3 mit dem ersten Knotenpunkt 5 auch über eine Reihenschaltung eines Widerstands 18 und eines Schalters 19 verbunden. Der Schalter 19 ist derart ausgebildet, dass er bidirektional leiten und bidirektional sperren kann. Auch der Schalter 19 ist üblicherweise spannungsgesteuert. Er kann ebenso wie die Halbleiterschalter 6 bis 9 beispielsweise auf IGBT-Basis oder auf FET-Basis ausgebildet sein. Er kann in manchen Fällen als Niederspannungselement ausgebildet sein, d.h. als Schaltelement, das nur Spannungen im Bereich von deutlich unter 1 kV, oftmals sogar von ca. 250 V oder weniger, schalten kann und auch nur Ströme im Bereich von wenigen Ampere leiten muss.

In der Ausgestaltung gemäß FIG 1 weist das Schaltelement 19 ein erstes und ein zweites Transistorelement 20, 21 auf. Die beiden Transistorelemente 20, 21 sind in Reihe geschaltet. Den beiden Transistorelementen 20, 21 ist jeweils Freilaufdiode 22 parallel geschaltet. Die beiden Freilaufdioden 22 sind gegenpolig angeordnet.

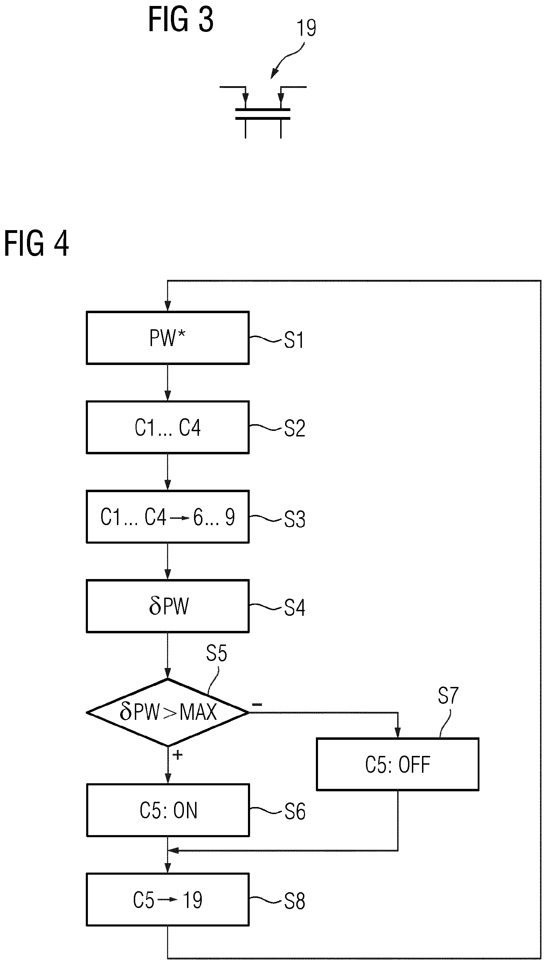

Die FIG 2 und 3 zeigen mögliche alternative Ausgestaltungen des Schalters 19.

In der Ausgestaltung gemäß FIG 2 weist das Schaltelement 19 weiterhin ein erstes und ein zweites Transistorelement 20, 21 auf. Die beiden Transistorelemente 20, 21 sind jedoch nicht in Reihe geschaltet, sondern parallelgeschaltet. Die beiden Transistorelemente 20, 21 sind in entgegengesetzte Richtungen stromleitend. Wenn sie gesperrt sind, sperren sie den Stromfluss in beide Richtungen. Parallel oder in Serie geschaltete Dioden sind bei der Ausgestaltung von FIG 2 nicht vorhanden.

Bei der Ausgestaltung gemäß FIG 3 ist das Schaltelement 19 als intrinsisch bidirektional schaltbares Schaltelement 19 ausgebildet. Derartige Schaltelemente können insbesondere auf GaN-Basis hergestellt sein.

Der Stromrichter weist gemäß FIG 1 eine Steuereinrichtung 23 auf. Die Steuereinrichtung 23 steuert die Halbleiterschalter 6 bis 9 an. Sie generiert zu diesem Zweck entsprechende Steuersignale C1 bis C4, die Steueranschlüssen der Halbleiterschalter 6 bis 9 zugeführt werden. Vorzugsweise erfolgt die Ansteuerung der Halbleiterschalter 6 bis 9 gemäß einer phasenverschobenen Pulsweitenmodulation (phase shift pulse width modulation). Diese Art der Ansteuerung ist Fachleuten bekannt und vertraut.

Die Steuereinrichtung 23 steuert mittels eines entsprechenden Steuersignals C5 auch den Schalter 19. Zu diesem Zweck überwacht die Steuereinrichtung 23 eine Pulsweite der Pulsweitenmodulation. Die Steuereinrichtung 23 schaltet den Schalter 19 durch, wenn und solange eine Änderung δPW der Pulsweite einen vorbestimmten Grenzwert MAX übersteigt. Anderenfalls, wenn also die Änderung δPW der Pulsweite den Grenzwert MAX nicht übersteigt, hält die Steuereinrichtung 23 den Schalter 19 in einem gesperrten Zustand.

Die vorstehend skizzierte Vorgehensweise wird nachstehend in Verbindung mit FIG 4 detaillierter erläutert.

Gemäß FIG 4 wird der Steuereinrichtung 23 in einem Schritt S1 ein Sollwert PW* für die Pulsweite bekannt. Beispielsweise kann der Steuereinrichtung 23 der Sollwert PW* von außen zugeführt werden. In einem Schritt S2 bestimmt die Steuereinrichtung 23 unter Verwertung des Sollwertes PW* die Steuersignale C1 bis C4 für die Halbleiterschalter 6 bis 9. In einem Schritt S3 steuert die Steuereinrichtung 4 die Halbleiterschalter 6 bis 9 entsprechend den ermittelten Steuersignalen C1 bis C4 an.

In einem Schritt S4 ermittelt die Steuereinrichtung 23 die Änderung δPW der Pulsweite. Beispielsweise kann die Steuereinrichtung 23 den aktuellen Sollwert PW* des jeweiligen Zyklus mit dem Sollwert PW* des unmittelbar vorhergehenden Zyklus vergleichen und so die Änderung δPW bestimmen.

In einem Schritt S5 prüft die Steuereinrichtung 23, ob die ermittelte Änderung δPW den vorbestimmten Grenzwert MAX übersteigt. Wenn dies der Fall ist, geht die Steuereinrichtung 23 zu einem Schritt S6 über. Anderenfalls geht die Steuereinrichtung 23 zu einem Schritt S7 über.

Im Schritt S6 bestimmt die Steuereinrichtung 23 das Steuersignal C5 für den Schalter 19 derart, dass der Schalter 19 durchgeschaltet wird. Im Schritt S7 bestimmt die Steuereinrichtung 23 das Steuersignal C5 derart, dass der Schalter 19 gesperrt wird. In einem nachfolgenden Schritt S8 gibt die Steuereinrichtung 23 das Steuersignal C5 an den Schalter 19 aus. Sodann geht die Steuereinrichtung 23 wieder zum Schritt S1 zurück.

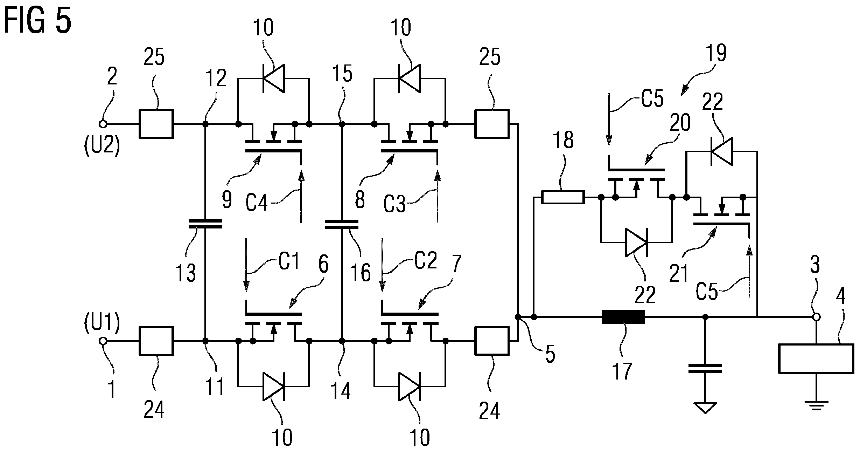

Nachstehend wird in Verbindung mit FIG 5 eine Modifikation des Stromrichters von FIG 1 erläutert. Der wesentliche Unterschied besteht darin, dass zusätzlich zu den Halbleiterschaltern 6 bis 9 erste und zweite weitere Halbleiterschalter 24, 25 vorhanden sind. Die ersten weiteren Halbleiterschalter 24 können nach Bedarf zwischen dem ersten Gleichspannungsanschluss 1 und dem ersten Halbleiterschalter 6 und/oder zwischen dem zweiten Halbleiterschalter 7 und dem ersten Knotenpunkt 5 angeordnet sein. In analoger Weise können die zweiten weiteren Halbleiterschalter 25 nach Bedarf zwischen dem zweiten Gleichspannungsanschluss 2 und dem vierten Halbleiterschalter 9 und/oder zwischen dem dritten Halbleiterschalter 8 und dem ersten Knotenpunkt 5 angeordnet sein. Gegebenenfalls können auch dritte, vierte usw. Kondensatoren (nicht dargestellt) vorhanden sein. Diese Kondensatoren sind einerseits mit einem weiteren Knotenpunkt zwischen zwei weiteren ersten Halbleiterschaltern 24 oder zwischen einem der weiteren ersten Halbleiterschalter 24 und dem ersten oder zweiten Halbleiterschalter 6, 7 verbunden. Andererseits sind diese Kondensatoren mit einem ebenfalls weiteren Knotenpunkt zwischen zwei weiteren zweiten Halbleiterschaltern 25 oder zwischen einem der weiteren zweiten Halbleiterschalter 25 und dem dritten oder vierten Halbleiterschalter 8, 9 verbunden.

Die Steuereinrichtung 23 ist in FIG 5 nicht mit dargestellt. Sie ist aber auch bei der Modifikation gemäß FIG 5 vorhanden. Sie steuert im Rahmen der Modifikation von FIG 5 - zusätzlich zu den Halbleiterschaltern 6 bis 9 und dem Schalter 19 - auch die ersten weiteren Halbleiterschalter 24 und die zweiten weiteren Halbleiterschalter 25 an.

Zusammengefasst betrifft die vorliegende Erfindung somit folgenden Sachverhalt:
Ein Stromrichter weist einen ersten Gleichspannungsanschluss 1, einen zweiten Gleichspannungsanschluss 2, einen Wechselspannungsanschluss 3 und einen ersten Knotenpunkt 5 auf. Der erste Gleichspannungsanschluss 1 ist über eine Reihenschaltung eines ersten Halbleiterschalters 6, eines zweiten Halbleiterschalters 7 und optional erster weiterer Halbleiterschalter 24 mit dem ersten Knotenpunkt 5 verbunden, wobei die beiden Halbleiterschalter 6, 7 unmittelbar aufeinander folgen und der erste Halbleiterschalter 6 näher am ersten Gleichspannungsanschluss 1 angeordnet ist als der zweite Halbleiterschalter 7. Der zweite Gleichspannungsanschluss 2 ist über eine Reihenschaltung eines dritten Halbleiterschalters 8, eines vierten Halbleiterschalters 9 und optional zweiter weiterer Halbleiterschalter 25 mit dem ersten Knotenpunkt 5 verbunden, wobei der dritte und der vierte Halbleiterschalter 8, 9 unmittelbar aufeinander folgen und der vierte Halbleiterschalter 9 näher am zweiten Gleichspannungsanschluss 2 angeordnet ist als der dritte Halbleiterschalter 8. Der Wechselspannungsanschluss 3 ist über eine Drossel 17 mit dem ersten Knotenpunkt 5 verbunden. Knotenpunkte 11, 12, die dem ersten und vierten Halbleiterschalter 6, 9 unmittelbar vorgeordnet sind, sind über einen ersten Kondensator 13 miteinander verbunden. Knotenpunkte 14, 15, die zwischen dem ersten und dem zweiten bzw. zwischen dem dritten und dem vierten Halbleiterschalter 6 bis 9 angeordnet sind, sind über einen zweiten Kondensator 16 miteinander verbunden. Der erste Knotenpunkt 5 und der Wechselspannungsanschluss 3 sind auch über eine Reihenschaltung eines Widerstands 18 und eines Schalters 19, der bidirektional leiten und bidirektional sperren kann, miteinander verbunden.

Die vorliegende Erfindung weist viele Vorteile auf. Insbesondere kann der Stromrichter mit einer einfachen und hocheffizienten Ausgleichsschaltung versehen werden, welche nur äußerst geringe Verluste aufweist. Eine Messung der Kondensatorspannungen ist weiterhin nicht erforderlich. Die Einschaltzeiten, während derer der Schalter 19 geschlossen ist, also Strom leitet, können sehr kurz gewählt werden. Meist ist eine Einschaltzeit im Bereich von 1 ms völlig ausreichend. Das Balancing kann schon eingeleitet werden, bevor sich eine nennenswerte Spannungsdifferenz aufgebaut hat. Dadurch ist es möglich, die Amplitude von Spannungsfehlern sehr gering zu halten. Der Schalter 19 kann auf Durchlassoptimierung ausgelegt werden. Weiterhin wird das Balancing aller Kondensatoren 13, 16 verbessert, also nicht nur das Balancing derjenigen Kondensatoren 13, 16, deren Spannung über der Spannung einer Zenerdiode liegt. Die Auslegung des Widerstands 18 ist einfach, da die Dauer der Einschaltzeit als bekannt vorausgesetzt werden kann. Der Schalter 19 kann einfach, klein und kostengünstig ausgelegt werden. Falls gewünscht, kann durch eine Taktung des Schalters 19 sogar die Größe des Stromes, die über den Widerstand 18 fließt, eingestellt werden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Stromrichter,
- wobei der Stromrichter einen ersten Gleichspannungsanschluss (1), einen zweiten Gleichspannungsanschluss (2), einen Wechselspannungsanschluss (3) und einen ersten Knotenpunkt (5) aufweist,
- wobei der erste Gleichspannungsanschluss (1) über eine Reihenschaltung eines ersten Halbleiterschalters (6), eines zweiten Halbleiterschalters (7) und optional erster weiterer Halbleiterschalter (24) mit dem ersten Knotenpunkt (5) verbunden ist,
- wobei der zweite Gleichspannungsanschluss (2) über eine Reihenschaltung eines dritten Halbleiterschalters (8), eines vierten Halbleiterschalters (9) und optional zweiter weiterer Halbleiterschalter (25) mit dem ersten Knotenpunkt (5) verbunden ist,
- wobei der Wechselspannungsanschluss (3) über eine Drossel (17) mit dem ersten Knotenpunkt (5) verbunden ist,
- wobei der erste und der zweite Halbleiterschalter (6, 7) unmittelbar aufeinander folgen und der erste Halbleiterschalter (6) näher am ersten Gleichspannungsanschluss (1) angeordnet ist als der zweite Halbleiterschalter (7),
- wobei der dritte und der vierte Halbleiterschalter (8, 9) unmittelbar aufeinander folgen und der vierte Halbleiterschalter (9) näher am zweiten Gleichspannungsanschluss (2) angeordnet ist als der dritte Halbleiterschalter (8),
- wobei ein zweiter Knotenpunkt (11), der dem ersten Halbleiterschalter (6) in Richtung auf den ersten Gleichspannungsanschluss (1) zu unmittelbar vorgeordnet ist, und ein dritter Knotenpunkt (12), der dem vierten Halbleiterschalter (9) in Richtung auf den zweiten Gleichspannungsanschluss (2) zu unmittelbar vorgeordnet ist, über einen ersten Kondensator (13) miteinander verbunden sind,
- wobei ein vierter Knotenpunkt (11), der zwischen dem ersten und dem zweiten Halbleiterschalter (6, 7) angeordnet ist, und ein fünfter Knotenpunkt (12), der zwischen dem dritten und dem vierten Halbleiterschalter (8, 9) angeordnet ist, über einen zweiten Kondensator (13) miteinander verbunden sind,
**dadurch gekennzeichnet,**
**dass** der erste Knotenpunkt (5) und der Wechselspannungsanschluss (3) auch über eine Reihenschaltung eines Widerstands (18) und eines Schalters (19), der bidirektional leiten und bidirektional sperren kann, miteinander verbunden sind.

2. Stromrichter nach Anspruch 1,
**dadurch gekennzeichnet,**
**dass** der erste Halbleiterschalter (6) direkt mit dem ersten Gleichspannungsanschluss (1) verbunden ist und der vierte Halbleiterschalter (9) direkt mit dem zweiten Gleichspannungsanschluss (2) verbunden ist.

3. Stromrichter nach Anspruch 1 oder 2,
**dadurch gekennzeichnet,**
**dass** der zweite und der dritte Halbleiterschalter (7, 8) direkt mit dem ersten Knotenpunkt (5) verbunden sind.

4. Stromrichter nach einem der obigen Ansprüche,
**dadurch gekennzeichnet,**
- **dass** der Stromrichter eine Steuereinrichtung (23) aufweist,
- **dass** die Steuereinrichtung (23) den ersten, den zweiten, den dritten und den vierten Halbleiterschalter (6 bis 9) sowie, sofern vorhanden, die ersten und zweiten weiteren Halbleiterschalter (24, 25) gemäß einer phasenverschobenen Pulsweitenmodulation ansteuert,
- **dass** die Steuereinrichtung (23) eine Pulsweite der Pulsweitenmodulation überwacht und
- **dass** die Steuereinrichtung (23) den Schalter (19) durchschaltet, wenn und solange eine Änderung (δPW) der Pulsweite einen vorbestimmten Grenzwert (MAX) übersteigt, und anderenfalls den Schalter (19) in einem gesperrten Zustand hält.

5. Stromrichter nach einem der Ansprüche 1 bis 4,
**dadurch gekennzeichnet,**
**dass** der Schalter (19) als Reihenschaltung eines ersten und eines zweiten Transistorelements (20, 21) ausgebildet ist, dass den beiden Transistorelementen (20, 21) jeweils eine Freilaufdiode (22) parallel geschaltet ist und dass die beiden Freilaufdioden (22) gegenpolig angeordnet sind.

6. Stromrichter nach einem der Ansprüche 1 bis 4,
**dadurch gekennzeichnet,**
**dass** der Schalter (19) als Parallelschaltung eines ersten und eines zweiten Transistorelements (20, 21) ausgebildet ist und dass die beiden Transistorelemente (20, 21) in entgegengesetzte Richtungen stromleitend sind.

7. Stromrichter nach einem der Ansprüche 1 bis 4,
**dadurch gekennzeichnet,**
**dass** der Schalter (19) als intrinsisch bidirektional schaltbares Schaltelement ausgebildet ist.
